# EUROPÄISCHE PATENTSCHRIFT

(11) **EP 1 543 530 B1**
(45) Veröffentlichungstag und Bekanntmachung des Hinweises auf die Patenterteilung: **12.10.2011**
(21) Anmeldenummer: 03740275.7
(22) Anmeldetag: 18.06.2003
(51) Int. Cl.: G21C 3/32

(54) **BRENNSTABBÜNDEL FÜR EINEN DRUCKWASSERKERNREAKTOR**
FUEL ELEMENT FOR A PRESSURIZED WATER REACTOR
ELEMENT COMBUSTIBLE POUR REACTEUR NUCLEAIRE A EAU SOUS PRESSION

(30) Priorität: 29.06.2002 DE 10229292; 08.08.2002 DE 10236399
(43) Veröffentlichungstag der Anmeldung: 22.06.2005
(73) Patentinhaber: AREVA NP GmbH, 91052 Erlangen (DE)
(72) Erfinder: STABEL, Jürgen, 91058 Erlangen (DE); BORSDORF, Udo, 91315 Höchstadt (DE); HÜBSCH, Hans-Peter, 91074 Herzogenaurach (DE)
(74) Vertreter: Mörtel & Höfner
(86) Internationale Anmeldenummer: PCT/EP2003/006431
(87) Internationale Veröffentlichungsnummer: WO 2004/003933

(56) Entgegenhaltungen:
- DE-A- 4 422 032
- DE-C- 19 635 927
- DE-U- 29 817 731
- US-A- 4 683 117
- PATENT ABSTRACTS OF JAPAN vol. 1999, no. 12, 29. Oktober 1999 (1999-10-29) & JP 11 202071 A (MITSUBISHI HEAVY IND LTD), 30. Juli 1999 (1999-07-30)

## Beschreibung

Die Erfindung bezieht sich auf ein Brennelement für einen Druckwasserkernreaktor, wie es beispielsweise aus der DE 196 35 927 Cl bekannt ist.

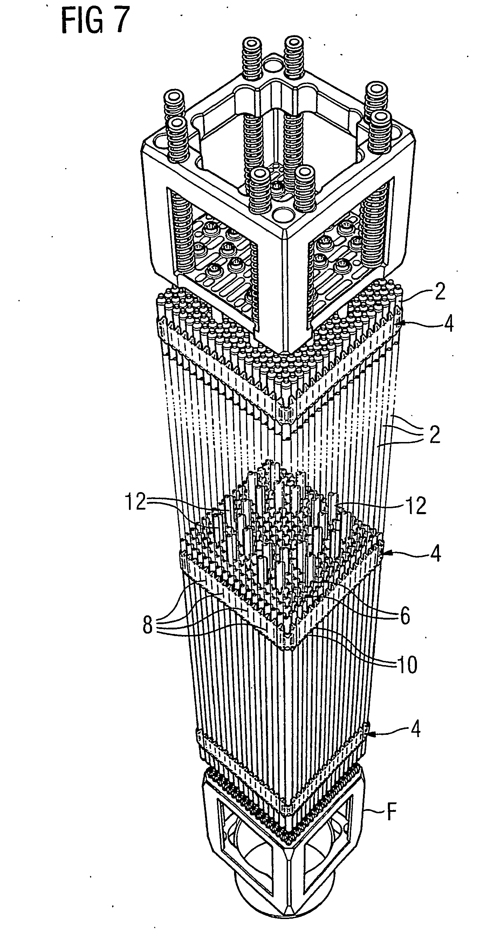

Ein solches Brennelement ist exemplarisch in Fig. 7 veranschaulicht. Bei einem solchen Brennelement sind eine Vielzahl von Brennstäben 2 in Stabrichtung (axial) parallel zueinander durch mehrere, voneinander axial beabstandete Abstandhalter 4 geführt, die jeweils ein zweidimensionales Gitter mit einer Mehrzahl von Maschen 6 bilden, die in Spalten 8 und Reihen 10 angeordnet sind. Durch die Maschen 6 dieses Gitters sind außer den Brennstäben auch an ausgewählten Positionen Stützrohre hindurch geführt, die keinen Brennstoff enthalten und zur Aufnahme und zum Führen von Steuerstäben (sog. Steuerstabführungsrohre 12) vorgesehen sind. Außerdem können noch Stützrohre vorhanden sein, die ebenfalls keinen Brennstoff enthalten und lediglich zur Erhöhung der Stabilität dienen (Instrumentierungsrohre oder Strukturrohre, im beispielhaft dargestellten Brennelement 2 sind weder Instrumentierungsrohre noch Strukturrohre vorgesehen). Diese Stützrohre sind anders als die Brennstäbe in den Maschen 6 mit den Abstandhaltern 4 verschweißt, so dass ihre stabilisierende Wirkung über die gesamte Einsatzdauer des Brennelements 2 gewährleistet ist.

Bei hypothetischen äußeren Störfällen, beispielsweise bei einem Erdbeben oder bei einem Kühlmittelverlust mit großen Bruch (LOCA - Loss Of Coolant Accident) können die Abstandhalter durch die benachbarten Brennelemente eine erhebliche Stoßbelastung erfahren. Die dabei auftretenden dauerhaften Verformungen dürfen zulässige Höchstwerte nicht überschreiten, um zu gewährleisten, dass die Steuerstäbe weiterhin in die Steuerstabführungsrohre eingeführt werden können, um so einen sicheren Weiterbetrieb oder ein sicheres Abschalten der Anlage zu ermöglichen. Während plastische Deformationen im begrenzten Umfang prinzipiell erlaubt sind, muss demzufolge ein größeres Ausbeulen, das zu einem signifikanten Versatz der im Brennelement angeordneten Steuerstabführungsrohre führt, vermieden werden.

Die Abstandhalter müssen demnach so ausgelegt werden, daß die zu erwartenden Stoßbelastungen nicht zu einem größeren Ausbeulen oder Ausknicken des Abstandhalters führen. In der Praxis wird als Entwicklungsziel eine Beulfestigkeit für frische, unbestrahlte Abstandhalter (BOL (= Begin Of Life)-Abstandhalter) von ca. 20 kN angestrebt. Damit ist für BOL-Abstandhalter, die im Rahmen eines Störfalles (Erdbeben, LOCA) auftretende Stoßbelastung (flächig wirkende Querkraft) abtragbar, so lange diese kleiner als 20 kN ist.

Es hat sich nun herausgestellt, daß Abstandhalter, die längere Zeit im Einsatz waren und am Ende ihrer Einsatzzeit (EOL = End Of Life) angelangt sind, im Vergleich zu neuen Abstandhaltern eine beträchtliche Reduktion ihrer Beulfestigkeit oder Beulgrenze aufweisen. Die Verringerung der Beulfestigkeit ist dabei vom jeweiligen Abstandhaltertyp abhängig und kann mehr als 50 bis 60 % betragen.

Aus der DE 44 22 032 A1 ist ein 18 x 18 Abstandhalter bekannt, der am Rand im Bereich seiner Ecken mit Stützrohren versehen ist, um Verbiegungen der Brennstäbe während des Reaktorbetriebes zu verringern. Auch bei diesem bekannten Abstandhalter ist jedoch die Beulfestigkeit am Ende der Einsatzzeit zwar verbessert, aber noch nicht optimal.

Aus US4.693.862, US4.302.294 und aus US4.683.117 sind Brennelemente mit brennstofffreien Stützrohren bekannt, die in Abstandhaltern geführt sind. Die Abstandhalter bilden jeweils ein quadratisches Gitter mit einer Vielzahl von Maschen, die in Reihen und Spalten angeordnet sind, und bei dem durch eine Anzahl dieser Maschen jeweils ein Stützrohr hindurchgeführt und mit dem Abstandhalter verbunden ist. Die Verteilung der Stützrohre im Gitter ist gegenüber einer Drehung um die zur Gitterebene senkrechte Mittenachse des Abstandhalters um 90° invariant.

Der Erfindung liegt nun die Aufgabe zugrunde, ein Brennelement für einen Druckwasserkernreaktor anzugeben, dessen Abstandhalter auch am Ende der Einsatzzeit auch bei starken Störfallbelastungen eine ausreichende Beulfestigkeit aufweisen.

Die genannte Aufgabe wird gemäß der Erfindung gelöst mit einem Brennelement mit den Merkmalen des Patentanspruches 1. Ein solches Brennelement enthält eine Vielzahl von Brennstäben, die in einer Mehrzahl von axial beabstandeten Abstandhaltern geführt sind, die jeweils ein quadratisches Gitter mit einer Vielzahl von Maschen bilden, die in Reihen und Spalten angeordnet sind. Durch eine Anzahl dieser Maschen ist jeweils ein Stützrohr hindurchgeführt das keinen Brennstoff enthält und in diesen stoffschlüssig mit dem Abstandhalter verbunden. Gemäß der Erfindung sind diese Stützrohre derart im Gitter so verteilt, daß sie gegenüber einer Drehung um die zur Gitterebene senkrechte Mittenachse des Abstandhalters um 90° rotationssymmetrisch sind und die Anzahl der stützrohrfreien Reihen und Spalten minimal ist. Außerdem sind die Stützrohre derart im Gitter verteilt, dass gegebenenfalls verbleibende innenliegende stützrohrfreie Reihen und Spalten nicht nebeneinander angeordnet sind. Mit anderen Worten: Gegebenfalls auftretende stützrohrfreie Mehrfach- oder Doppelreihen bzw. - spalten befinden sich ausschließlich am Rand des Brennelementes.

Diese Maßnahmen bewirken eine deutliche Verbesserung der EOL-Beulfestigkeit, wobei trotz des Vorhandenseins stützrohrfreier Reihen und Spalten eine optimierte EOL-Beulfestigkeit sichergestellt ist.

Die Erfindung beruht dabei auf der Erkenntnis, dass die Ursache für die verringerte EOL-Beulfestigkeit eine Relaxation der in den Maschen des Abstandhalters zur federnden Lagerung der Brennstäbe befindlichen Federelemente ist. Durch die Relaxation der Stablagerung im Laufe des Betriebs entfällt die Stützwirkung der Brennstäbe auf die Abstandhalterstruktur, so dass nur noch die in den Maschen des Abstandhalters verschweißten Steuerstabführungsrohre, Strukturrohre oder Instrumentierungsrohre - in der Anmeldung verallgemeinert als "Stützrohre" bezeichnet, stützend wirken.

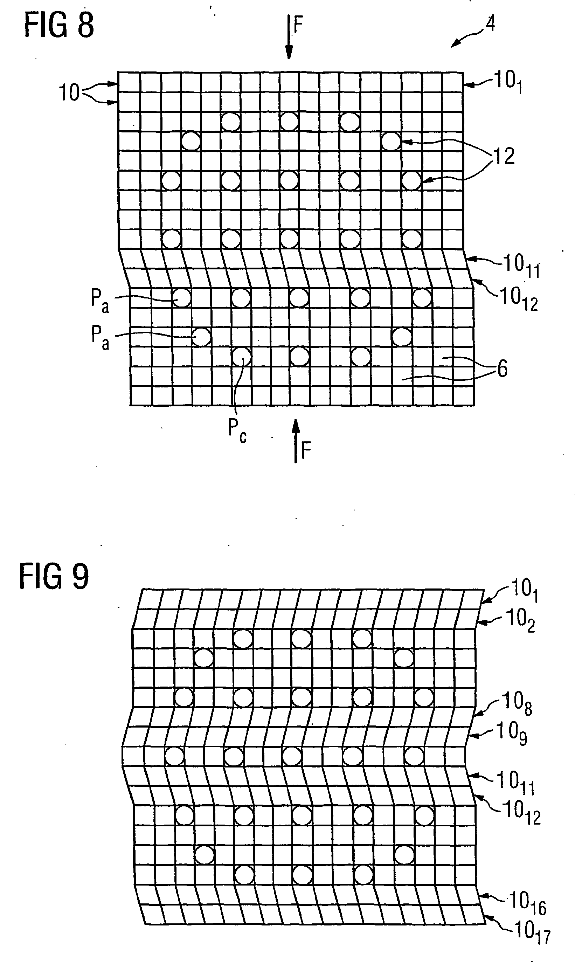

Fig. 8 und 9 zeigen nun jeweils in einer schematischen Darstellung einen üblichen Abstandhalter 4, im Beispiel ein Abstandhalter mit 17 x 17 Maschen 6, auf dessen gegenüberliegende Seitenkanten eine Presskraft F senkrecht zu den Reihen 10 ausgeübt worden ist, die oberhalb der Knick- oder Beulgrenze Fₖᵣᵢₜ liegt. Für die entsprechenden Laborversuche wurden in den Abstandshalter 4 an den Positionen Pₐ, an denen sich im Brennelement Steuerstabführungsrohre 12 befinden, Stützrohrabschnitte eingeschweißt, die beidseitig etwa 10mm über den Abstandhalter 4 überstehen. Um die EOL-Beulfestigkeit beurteilen zu können, wurde der Abstandhalter 4 entweder thermisch relaxiert und jede stützrohrfreie Masche 6 mit Abschnitten von Brennstabhüllrohren besetzt, die zu dem jeweiligen Abstandhaltertyp gehören, oder es wurden anstelle der für diesen Abstandhaltertyp normalerweise vorgesehenen Hüllrohrabschnitte Rohrabschnitte mit geringfügig kleinerem Außendurchmesser eingesetzt, um auf diese Weise das Relaxieren des Abstandhalters 4 zu simulieren. Auch die eingesetzten Hüllrohrabschnitte stehen über den Abstandhalter 4 vor und simulieren die bei komplett konfigurierten Brennelement in den nicht von Steuerstabführungsrohren durchsetzten Maschen federnd gelagerten Brennstäbe.

In Fig. 8 ist nun beispielhaft zu erkennen, dass bei Erreichen der Beulgrenze Fₖᵣᵢₜ ein schubartiges Ausbeulen oder Ausknicken von zwei mittleren Reihen 10₁₁, 10₁₂ erfolgt. Eine Erhöhung der Querkraft F führt zu einem Ausknicken weiterer Reihen 10₁, 10₂, 10₈, 10₉, 10₁₆ und 10₁₇, wie dies in Fig. 10 veranschaulicht ist.

Zudem zeigen Fig. 8 und 9, dass das Ausbeulen zunächst in den Reihen 10 auftritt, die keinen fest mit dem Abstandhalter 4 verschweißten Stützrohrabschnitt enthalten (stützrohrfreie Reihe).

Aufbauend auf dieser Erkenntnis geht nun die Erfindung von der Überlegung aus, dass die Konfiguration der fest im Abstandhalter verschweißten Stützrohre dessen EOL-Beulfestigkeit wesentlich beeinflusst. Für jedes vorgegebene Brennelement mit einem vorgegebenen Abstandhaltertyp kann nun durch Modifikation der Anordnung dieser Stützrohre eine Konfiguration gefunden werden, die unter Beibehaltung der Symmetrieanforderungen sowie der Anzahl der Stützrohre ein verbessertes EOL-Beulverhalten aufweist.

Besonders vorteilhaft ist eine Anordnung, bei der die Stützrohre derart im Gitter verteilt sind, dass sich zwischen den ein Stützrohr enthaltenden Reihen und Spalten keine stützrohrfreien Reihen bzw. Spalten befinden. Mit anderen Worten: Gegebenfalls verbleibende stützrohrfreie Reihen und Spalten befinden sich ausschließlich am Rand. In dieser Ausführungsform ist die Einführbarkeit der Steuerstäbe auch bei einem Ausknicken des Abstandhalters verbessert.

Bei ungeänderter Konfiguration der Steuerstabführungsrohre kann zumindest ein zusätzliches Strukturrohr in einer Masche des Abstandhalters stoffschlüssig mit diesem verbunden werden, um innenliegende stützrohrfreie Doppelreihen und Doppelspalten zu vermeiden. Diese zusätzlichen Stützrohre wären eigentlich aus Gründen der Stabilität am Beginn des Einsatzes des Abstandhalters (BOL = Begin Of Life) nicht erforderlich, erhöhen aber dessen EOL-Beulfestigkeit derart, dass diese einen Wert erreicht, der der BOL-Beulfestigkeit des nicht mit zusätzlichen Strukturrohren versehenen typgleichen Abstandhalters entspricht. Mit anderen Worten: Es wird in einen bekannten Brennelementtyp zusätzlich ein Strukturrohr (bei außermittiger Position aus Symmetriegründen mindestens vier Strukturrohre) eingebracht, obwohl sie zumindest zu Beginn seines Einsatzes aus Festigkeitsgründen nicht notwendig scheinen und eigentlich wegen der damit verbundenen Leistungsminderung des Brennelementes vermieden werden.

Zur weiteren Erläuterung der Erfindung wird auf die Ausführungsbeispiele der Zeichnung verwiesen. Es zeigen:
- Fig. 1: in einer Draufsicht einen Abstandhalter eines 17x17- Brennelementes in einer Prinzipdarstellung, in der die Positionen der Steuerstab-Führungsrohre eines im Stand der Technik verwendeten Abstandhalters und die Positionen der Steuerstabführungsrohr für eine gemäß der Erfindung verbesserte Anordnung eingezeichnet sind,
- Fig. 2: eine entsprechend verbesserte Anordnung für ein 17x17 Brennelement, bei dem im Zentrum kein Instrumentie- rungsrohr angeordnet ist,
- Fig. 3, 4: alternative Ausführungsformen für ein 17x17- Brennelement mit verbesserter Steuerstabführungs- rohranordnung mit bzw. ohne innenliegendem Instrumen- tierungsrohr
- Fig. 5: den Abstandhalter einer verbes- serten Ausführungsform eines 17x17-Brennelementes oh- ne innenliegendem Instrumentierungsrohr, bei der die Positionen der Steuerstabführungsrohre unverändert sind,
- Fig. 6: ein Diagramm, in das der Verformungsweg eines Ab- standhalters gegen die Querkraft aufgetragen ist,
- Fig. 7: ein Brennelement für einen Druckwasserkernreaktor, wie es im Stand der Technik bekannt ist,
- Fig. 8, 9: jeweils einen bekannten Abstandhalter in einer sche- matischen Draufsicht nach der Durchführung eines Ver- formungsversuches.

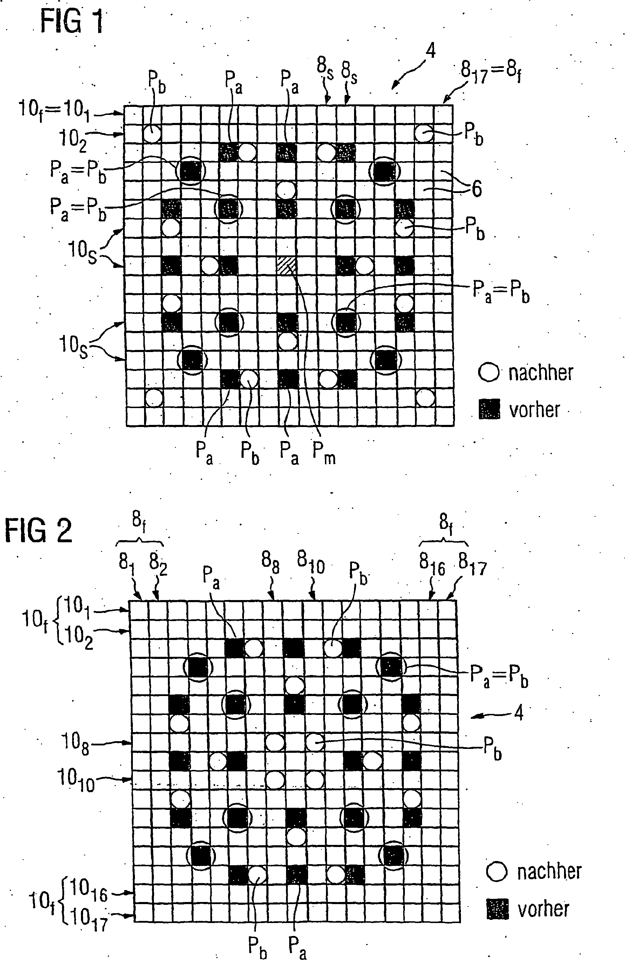

Gemäß Fig. 1 sind in einem Abstandhalter 4 eine Mehrzahl von Maschen 6 in Positionen Pₐ, P_{b} von Steuerstabführungsrohren durchsetzt, die symmetrisch um die sich senkrecht zur Zeichnungsebene erstreckende Mittenachse des Abstandhalters 4 bzw. des Brennelements derart verteilt sind, dass sie bei Drehung um 90° in sich selbst übergeführt werden. In der Figur sind lediglich die Positionen Pₐ, P_{b} der Steuerstabführungsrohre dargestellt. Die Steuerstabführungsrohre sind aus Gründen der Übersichtlichkeit nicht eingezeichnet.

Gezeigt ist der Abstandhalter 4 eines 17 x 17-Brennelementes, das in der Mittenposition Pₘ, d. h. dessen in der Mitte befindliche, schraffiert gekennzeichnete Masche 6 mit einem in der Figur ebenfalls nicht dargestellten Instrumentierungsrohr versehen ist. Schwarz ausgefüllt sind dabei die Positionen Pₐ der Steuerstabführungsrohre, wie sie bei einem bekannten Brennelement realisiert sind (Steuerstabposition "vorher"). Mit einem Kreis eingezeichnet sind Positionen P_{b} der Steuerstabführungsrohre, wie sie sich gemäß der Erfindung unter dem Gesichtspunkt der Verbesserung der EOL-Beulfestigkeit ergeben (Steuerstabpositionen "nachher"). Die mit einem Kreis umschlossene Position Pₐ = P_{b} eines Steuerstabführungsrohres bedeutet, dass dort auch bei der verbesserten Ausführung ein Steuerstabführungsrohr verbleibt. Alle übrigen Steuerstabführungsrohre sind in ihrer Position verändert worden.

In der Figur ist nun zu erkennen, daß bei Aufrechterhaltung ihrer Anzahl eine Verteilung der Steuerstabführungsrohre derart vorgenommen worden ist, dass einerseits die Anzahl der stützrohrfreien Reihen 10_{f} (im Beispiel 10₁, 10₈, 10₁₀, 10₁₇) und Spalten 8_{f} (im Beispiel 8₁, 8₈, 8₁₀, 8₁₇) unter der Nebenbedingung einer Rotationssymmetrie um 90° (Invarianz der Anordnung bei einer Drehung um 90°) minimiert ist, und dass andererseits dafür Sorge getragen ist, dass diese verbleibenden stützrohrfreien Reihen bzw. Spalten 10_{f}, 8_{f} nicht nebeneinander angeordnet sind.

Auch nach der Neuverteilung der Steuerstabführungsrohre verbleiben zwischen den Reihen 10ₛ und Spalten 8ₛ, in denen jeweils zumindest ein Stützrohr (Steuerstabführungsrohr oder Instrumentierungsrohr) angeordnet ist, stützrohrfreie Reihen 10_{f} bzw. 8_{f}. Im Ausführungsbeispiel sind dies die zwischen den ein Stützrohr enthaltenden Reihen 10₇, 10₉ bzw. 10₉ und 10₁₁ befindlichen Reihen 10₈ bzw. 10₁₀ (entsprechendes gilt für die Spalten) .

Im Ausführungsbeispiel gemäß Fig. 2 ist eine optimierte Anordnung der Steuerstabführungsrohre bei einem 17 x 17-Brennelement ohne innenliegendem Instrumentierungsrohr veranschaulicht. Hier sind ebenfalls bis auf acht Positionen Pₐ = P_{b} alle übrigen Positionen umverteilt, so dass nur noch jeweils die beiden Reihen 10_{1,2,16,17} und Spalten 8_{1,2,16,17} am Rand stützrohrfrei sind. Da innenliegende Reihen bzw. Spalten vorrangig gestützt werden müssen, sind wegen des fehlenden zentralen Instrumentierungsrohres vier Steuerstabführungsrohre auf die Reihen 10_{8,10} bzw. Spalten 8_{8,10} umverteilt, so dass in diesem Ausführungsbeispiel eine doppelt unbesetzte Randspalte bzw. Randreihe verbleibt.

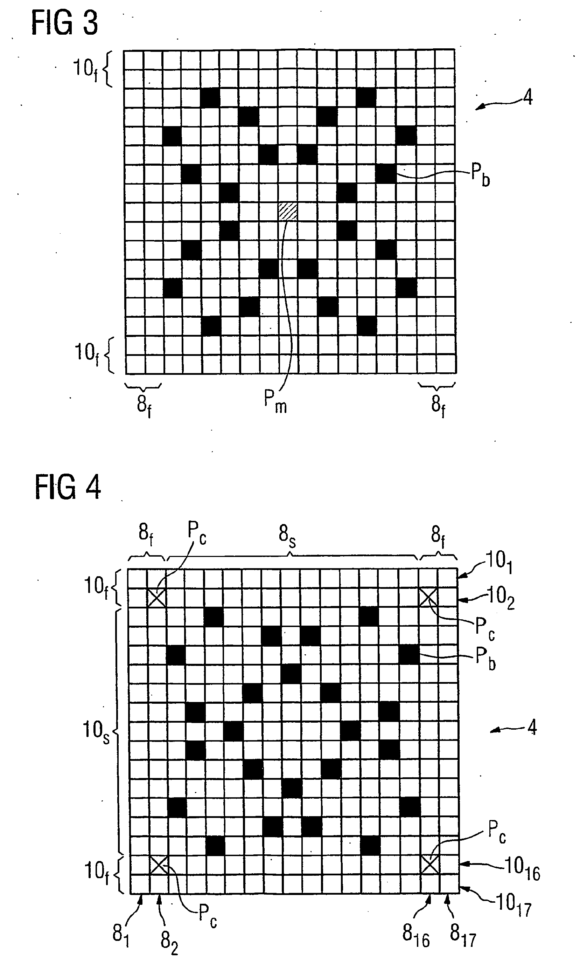

In der alternativen Ausführungsform nach Fig. 3, in der aus Gründen der Übersichtlichkeit nur die verbesserte Steuerstabanordnung durch schwarz ausgefüllte Maschen P_{b} dargestellt ist, sind bei einem 17x17-Brennelement mit innenliegendem Instrumentierungsrohr (schraffierte Masche Pₘ) ebenfalls die beiden am Rand befindlichen Reihen 10_{1,2,16,17} und Spalten 8_{1,2,16,17} nicht mit einem Steuerstabführungsrohr 12 besetzt.

Fig. 4 zeigt eine alternative Ausführungsform ohne innenliegendem Instrumentierungsrohr. Auch in dieser Variante sind nur die beiden am Rand befindlichen Reihen 10_{1,2,16,17} und Spalten 8_{1,2,16,17} nicht mit einem Steuerstabführungsrohr besetzt, so dass sich zwischen den ein Stützrohr enthaltenden Reihen 10ₛ bzw. Spalten 8ₛ keine stützrohrfreien Reihen 10_{f} bzw. Spalten 8_{f} befinden.

Bei der in Fig. 4 dargestellten Konfiguration der Steuerstabführungsrohre lässt sich durch die Anbringung zusätzlicher Strukturrohre in den durch ein Kreuz gekennzeichneten Positionen P_{c}, die sich auf den Hauptdiagonalen in den Reihen bzw Spalten 10_{2,16} bzw. 8_{2,16} befinden, die den am Rand befindlichen Reihen bzw. Spalten 10_{1,17} bzw. 8_{1,17} unmittelbar benachbart sind, eine weitere signifikante Verbesserung der EOL-Beulgrenze erreichen.

Grundsätzliches Designkriterium bei der gemäß der Erfindung verbesserten.Anordnung der Stützrohre ist in allen vorstehend erläuterten Ausführungsform das Prinzip, die Anzahl der stützrohrfreien Reihen und Spalten unter Aufrechterhaltung der 90°-Drehinvarianz dadurch zu minimieren, dass keine der Reihen oder Spalten mehr als zwei Stützrohre und dort, wo aus Symmetriegründen möglich, nur noch ein einziges Stützrohr enthalten. Bei ungeradzahliger Anzahl der Reihen und Spalten können dabei die Reihen bzw. Spalten, die zu einer Stützrohrposition auf der mittleren Reihe oder der mittleren Spalte gehören und senkrecht zu diesen verlaufen, jeweils nur ein einziges Stützrohr (Steuerstabführungsrohr, Strukturrohr, Instrumentierungsrohr) enthalten.

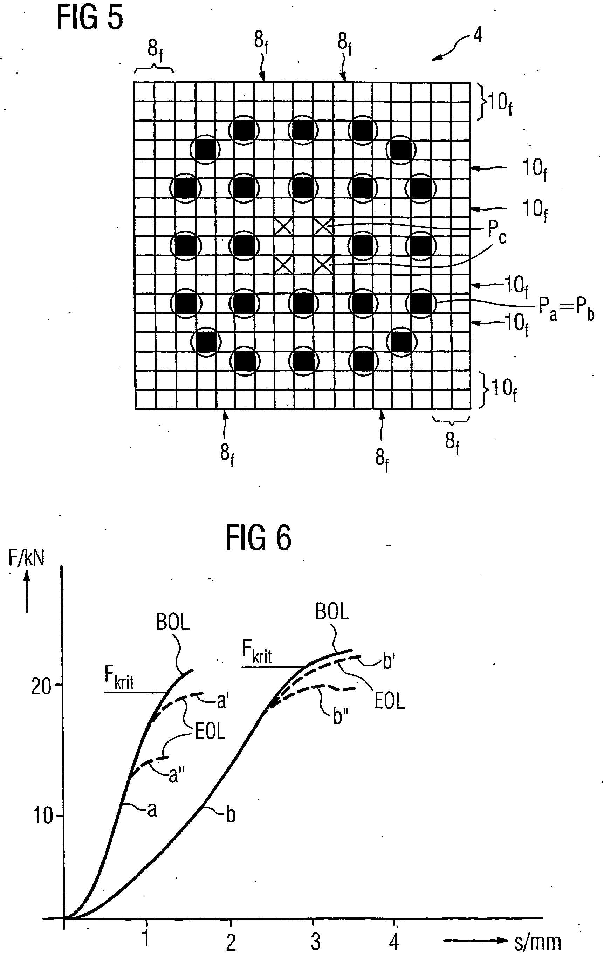

In Fig. 5, welche jedoch nicht unter Anspruch 1 fällt, sind an den mit einem Kreuz gekennzeichneten Positionen P_{c} bei dem im Stand der Technik bekannten 17 x 17-Brennelement ohne Instrumentierungsrohr zusätzlich vier Strukturrohre eingefügt, wobei die Positionen Pₐ = P_{b} der Steuerstabführungsrohre unverändert sind. Dadurch werden die bei Experimenten als besondere Schwachstelle erkannten innenliegende stützrohrfreie Doppelreihe 10_{7,8} und 10_{10,11} bzw. Doppelspalte 8_{7,8} bzw. 8_{10,11} eliminiert und die EOL-Beulfestigkeit signifikant erhöht. Ein in dieser Weise verbessertes Brennelement kann problemlos auch in bestehenden Druckwasserkernreaktoranlagen mit diesem Brennelementtyp eingesetzt werden, da die Positionen der Steuerstabführungsrohre unverändert bleiben. Auch nur werden vorrangig die innenliegenden Reihen oder Spalten stabilisiert.

Ein Vergleich des Beulverhaltens der Abstandhalter nach Fig. 4 und 5 zeigt außerdem, dass die in Fig. 4 dargestellte Konfiguration gegenüber den in Fig. 5 dargestellten Abstandhalter einen Vorteil aufweist, wenn die Querkraft größer ist als die Beulgrenze und es zum Ausbeulen oder Ausknicken des Abstandhalters kommt. In diesem Fall bildet die in Fig. 4 dargestellte Konfiguration der Steuerstabführungsrohre eine in sich strukturstabile Unterstruktur, die sich beim Ausknicken in ihrer Gesamtheit versetzt, ohne dass es zu wesentlichen Änderungen der Relativpositionen der Steuerstabführungsrohre untereinander kommt. In einem solchen Fall ist die Einführbarkeit der Steuerstäbe auch bei einem Ausknicken noch gewährleistet, da der gleichmäßige Versatz, dessen Größenordnung nur wenige Millimeter beträgt, mechanisch einem gleichmäßig durchgebogenen Brennelement entspricht. Mit anderen Worten: Besonders vorteilhaft sind Konfigurationen, bei denen die Gesamtheit der Stützrohre derart im Abstandhalter verteilt sind, dass es keine stützrohrfreien Reihen oder Spalten gibt, die sich zwischen Reihen oder Spalten befinden, die ein Stützrohr enthalten. In einem solchen Fall verhält sich die von den Stützrohren festgelegte Struktur wie ein stabiles Untergitter.

Im Diagramm gemäß Fig. 6 ist das Beulverhalten zweier Abstandhalter veranschaulicht, die bei identischer Verteilung der Stützrohre eine unterschiedliche Steifigkeit aufweisen. Diese unterschiedliche Steifigkeit ergibt sich sowohl materialbedingt als auch konstruktionsbedingt aus der Gestaltung der Maschen (Wanddicke, Einzel- oder Doppelsteg) und der in ihr gelagerten oder in diese integrierten Federelemente sowie der Dicke und Form (Linienschweißung, Punktschweißung) der Schweißnaht an den Kreuzungsstellen der Maschen. Kurven a und b zeigen den Verformungsweg S in Abhängigkeit von der Querkraft F für einen steifen bzw. "weichen" Abstandhalter. Durchgezogen ist jeweils die Kurve, die sich bei neuem Abstandhalter (BOL-Abstandhalter) ergibt. Gestrichelt eingezeichnet sind Kurven, wie sie sich bei einem baugleichen Abstandhalter am Ende seiner Einsatzzeit (EOL) ergeben.

Mit a' und b' sind Kurven eines gemäß der Erfindung optimierten Abstandhalters bezeichnet. Kurven a" , b" ergeben sich bei einem Abstandhalter, der hinsichtlich der Stützrohranordnung nicht optimiert ist. Deutlich ist zu erkennen, dass die EOL-Beulgrenze des "weichen" Abstandhalters auch bei nichtoptimierter Stützrohranordnung nicht so ausgeprägt verschlechtert ist wie beim "steifen" Abstandhalter. In der Figur ist außerdem zu erkennen, dass die Beulgrenze Fₖᵣᵢₜ bei dem Abstandhalter mit der größeren Steifigkeit (Kurve a) bei einem niedrigeren Verformungsweg erreicht wird, als dies beim Abstandhalter mit der kleineren Steifigkeit (Kurve b) der Fall ist. Ursache hierfür ist die bei einem größeren Verformungsweg erneut einsetzende Stabilisierungswirkung der Brennstäbe. Dies wird sichergestellt, wenn der Verformungsweg S vor dem Erreichen der Beulgrenze, die für BOL-Abstandhalter auf etwa 20 KN festgelegt ist, wenigstens 2 mm, vorzugsweise zwischen 3 und 4 mm beträgt. Dies entspricht einer Steifigkeit des Abstandhalters von 10 kN/mm bzw. zwischen 7 und 5 kN/mm.

### Bezugszeichenliste

- 2: Brennstab
- 4: Abstandhalter
- 6: Masche
- 8ᵢ: Spalte
- 8_{f}, 8ₛ: stützrohrfreie, Stützrohr enthaltende Spalte
- 10ᵢ: Reihe
- 10_{f}, 10ₛ: stützrohrfreie, Stützrohr enthaltende Reihe
- 12: Steuerstabführungsrohr
- Pₘ: Mittenposition
- Pₐ: Steuerstabposition vorher
- P_{b}: Steuerstabposition nachher
- P_{c}: Strukturstabposition
- a,b: Kurve
- BOL: Begin Of Life
- EOL: End Of Life
- F: Kraft
- S: Verformungsweg

## Patentansprüche

1. Brennelement für einen Druckwasserkernreaktor, mit einer
Vielzahl von Brennstäben (2), einer Mehrzahl von axial beabstandeten Abstandhaltern (4) und einer Anzahl an Stützrohren,
wobei die Vielzahl von Brennstäben in der Mehrzahl von axial beabstandeten Abstandhaltern (4) geführt sind, die jeweils ein quadratisches Gitter mit einer Vielzahl von Maschen (6) bilden, die in Reihen (10) und Spalten (8) angeordnet sind,
und bei dem durch eine Anzahl dieser Maschen jeweils ein Stützrohr, das keinen Brennstoff enthält, hindurchgeführt und in diesen stoffschlüssig mit dem Abstandhalter (4) verbunden ist,
wobei die Verteilung der Positionen (Pa, Pb, Pc) der Stützrohre im Gitter invariant gegenüber einer Drehung um die zur Gitterebene senkrechte Mittenachse des Abstandhalters (4) um 90° ist,
und **dadurch gekennzeichnet, dass** die Verteilung der Positionen (Pa, Pb, Pc) der Stützrohre im Gitter so ist, dass die Anzahl der stützrohrfreien Reihen (10f) und Spalten (8f) minimal ist, und dass gegebenenfalls verbleibende innenliegende stützrohrfreien Reihen (10f) und Spalten (8) nicht nebeneinander angeordnet sind.

2. Brennelement nach Anspruch 1, bei dem
die Stützrohre derart im Gitter verteilt sind, dass verbleibende stützrohrfreie Reihen (10_{f}) und Spalten (8_{f}) sich ausschließlich am Rand befinden.

3. Brennelement nach Anspruch 1 oder 2, das zumindest eine steuerstabführungsrohrfreie Reihe (10_{f}) und Spalte (8_{f}) aufweist, die mit zumindest einem Strukturrohr versehen ist.

4. Brennelement nach einem der vorhergehenden Ansprüche, bei dem zumindest ein Abstandhalter (4) eine Steifigkeit aufweist, die höchstens 10 kN/mm beträgt.

5. Brennelement nach Anspruch 4, bei dem der zumindest eine Abstandhalter (4) eine Steifigkeit zwischen 5 und 7 kN/mm aufweist.

## Claims

1. Fuel assembly for a pressurized-water nuclear reactor, having a
multiplicity of fuel rods (2), a plurality of axially spaced spacers (4) and a number of support tubes,
the multiplicity of fuel rods being guided in the plurality of axially spaced spacers (4), which in each case form a square grid with a multiplicity of meshes (6) arranged in rows (10) and columns (8),
and in which in each case one support tube, which does not contain any fuel, is guided through a number of these meshes, and is cohesively joined to the spacer (4) in these meshes,
the distribution of the positions (Pₐ, P_{b}, P_{c}) of the support tubes in the grid not varying in the event of rotation through 90° about the center axis, perpendicular to the grid plane, of the spacer (4),
and **characterized in that** the distribution of the positions (Pₐ, P_{b}, P_{c}) of the support tubes in the grid is such that the number of rows (10_{f}) and columns (8_{f}) without any support tubes is at a minimum, and that any remaining inner rows (10_{f}) and columns (8) without any support tubes are not arranged next to one another.

2. Fuel assembly according to Claim 1, in which the support tubes are distributed in the grid in such a manner that remaining rows (10_{f}) and columns (8_{f}) without any support tubes are located exclusively at the edge.

3. Fuel assembly according to Claim 1 or 2, which has at least one row (10_{f}) and column (8_{f}) without any control rod guide tubes which is provided with at least one structure tube.

4. Fuel assembly according to one of the preceding claims, in which at least one spacer (4) has a rigidity which is not more than 10 kN/mm.

5. Fuel assembly according to Claim 4, in which the at least one spacer (4) has a rigidity of between 5 and 7 kN/mm.

## Revendications

1. Elément de combustible pour réacteur nucléaire à eau pressurisée comportant
une pluralité de barres de combustible (2), une pluralité d'espaceurs (4) écartés axialement et un certain nombre de tubes supports,
la pluralité de barres de combustible (2) étant guidées dans la pluralité d'espaceurs (4) écartés axialement, lesquels forment respectivement une grille carrée pourvue d'une pluralité de mailles (6) qui sont disposées en rangées (10) et colonnes (8),
et dans lequel respectivement un tube support qui ne contient pas de combustible passe à travers un certain nombre de ces mailles et est relié par liaison de matière dans celles-ci à l'espaceur (4),
la répartition des positions (Pa, Pb, Pc) des tubes supports dans la grille étant invariable par rapport à une rotation de 90° autour de l'axe médian perpendiculaire au plan de la grille de l'espaceur (4),
et **caractérisé en ce que** la répartition des positions (Pa, Pb, Pc) des tubes supports dans la grille est telle que le nombre de rangées (10_{f}) et colonnes (8_{f}) sans tube support est minimal et que les rangées (10_{f}) et colonnes (8_{f}) sans tube support situé à l'intérieur éventuellement restantes ne sont pas contiguës.

2. Elément de combustible selon la revendication 1, dans lequel les tubes supports sont disposés dans la grille de manière à ce que les rangées (10_{f}) et colonnes (8_{f}) sans tube support restantes se trouvent exclusivement au bord.

3. Elément de combustible selon la revendication 1 ou 2, qui présente au moins une rangée (10_{f}) et colonne (8_{f}) dépourvue de tubes de guidage de barre de commande et qui est pourvue d'au moins un tube structurel.

4. Elément de combustible selon une des revendications précédentes, dans lequel au moins un espaceur (4) présente une rigidité qui s'élève au plus à 10 kN/mm.

5. Elément de combustible selon la revendication 4, dans lequel au moins un espaceur (4) présente une rigidité comprise entre 5 et 7 kN/mm.
